# EUROPEAN PATENT SPECIFICATION

(11) **EP 2 525 561 B1**
(45) Date of publication and mention of the grant of the patent: **30.03.2022**
(21) Application number: 11747442.9
(22) Date of filing: 24.02.2011
(51) Int. Cl.: H04N 1/387, G06T 13/00, G06T 13/80, G06T 1/00

(54) **DATA-GENERATING DEVICE, DATA-GENERATING METHOD, DATA-GENERATING PROGRAM, AND RECORDING MEDIUM**
DATENERZEUGUNGSVORRICHTUNG, DATENERZEUGUNGSVERFAHREN, DATENERZEUGUNGSPROGRAMM UND AUFZEICHNUNGSMEDIUM
DISPOSITIF, PROCÉDÉ AINSI QUE PROGRAMME DE GÉNÉRATION DE DONNÉES, ET SUPPORT D'ENREGISTREMENT

(30) Priority: 26.02.2010 JP 2010042191
(43) Date of publication of application: 21.11.2012
(73) Proprietor: Rakuten Group, Inc., Setagaya-ku Tokyo 158-0094 (JP)
(72) Inventor: TAKAMI, Shinya, Tokyo 140-0002 (JP)
(74) Representative: Hoffmann Eitle
(86) International application number: PCT/JP2011/054135
(87) International publication number: WO 2011/105482

(56) References cited:
- EP-A1- 1 665 811
- EP-A1- 2 079 051
- JP-A- 2000 259 139
- JP-A- 2003 264 816
- US-A1- 2004 033 060
- US-A1- 2006 029 252
- US-A1- 2008 152 210
- US-A1- 2008 281 851

## Description

### Technical Field

The present invention relates to a technical field of preventing content displayed on a screen from being replicated.

### Background Art

Conventionally, screen capture (also referred to as, for example, "screen shot" or "screen dump") is known of storing content to be displayed on a screen by display processing of electronic data such as electronic document or images as still image data. This screen capture function is provided by, for example, an operating system, or can be realized by executing screen capture software. Hence, there is a problem that content such as personal information or copyrighted work which is undesirable to be replicated is easily replicated.

Therefore, for example, a method is proposed of restricting browsing of content without browsers to which a function of disabling screen capture is added. However, if a user takes a picture of a screen, it is still possible to replicate display content on the screen.

With regard to this problem, Patent Literature 1 discloses a technique of preventing digital shoplifting of capturing an image of content of a book using a digital camera. More specifically, digital watermark is printed on pages of a book. Further, when the digital camera detects digital watermark from captured images, processing of forbidding storage or transmission of images, or tessellating the captured images or destroying readability of letters.

### Citation List

### Patent Literature

Patent Literature 1: Japanese Patent Application Laid-Open No. 2005-151124 The document US 2006/029252 A1 (SO VINCENT [CA]) 9 February 2006 (2006-02-09) discloses a system where a still image is converted to a movie by replicating the still image a number of times and masking some blocks of each frame

### Summary of Invention

### Problem to be solved by the Invention

However, the technique disclosed in Patent Literature 1 requires that a digital camera itself has a function of preventing digital shoplifting. Hence, replication can be carried out by capturing an image using a digital camera without this function.

In light of the above foregoing problems, it is therefore an object of the present invention to provide a data-generating device, a data-generating method, a data-generating program and a recording medium which can prevent content displayed on a screen from being accurately replicated.

### Means for solving the Problem

The object of the invention is achieved by the subject-matter of the independent claims. Advantageous embodiments are defined in the dependent claims. Further examples are provided for facilitating the understanding of the invention.

According to an example, it is provided a data-generating device comprising:
an acquiring means that acquires still image data;
a still image data generating means that generates a predetermined number of items of still image data in which at least part of pixels of the acquired still image data are masked, and that varies positions of at least part of pixels in pixels to be masked, between at least two items of still image data of the predetermined number of still image data; and
a movie data generating means that generates movie data for which each of the generated still image data is displayed at a predetermined frame rate.

According to the present invention, the generated movie data is played back, so that a predetermined number of items of still image data are sequentially displayed at predetermined time intervals. Hence, even when display content on the screen at a given moment is replicated by screen capture or image capturing, content to be replicated is only the same as display content of one still image data of the predetermined number of items of still image data in which at least part of pixels are masked. By contrast with this, while the predetermined number of items of still image data are sequentially displayed at predetermined time intervals, unmasked pixels of each still image data are displayed on the screen. Consequently, it is possible to make people who look at the screen recognize that content more similar to display content of the acquired original still image data than each one of the predetermined number of items of still image data is displayed. Consequently, it is possible to prevent content displayed on the screen from being accurately replicated.

According to another example of the data-generating device,
wherein the still image data generating means determines a position of a pixel to be masked such that a mask pattern of still image data to be generated becomes irregular.

According to another example of the data-generating device,
wherein the still image data generating means varies a rate of pixels to be masked in at least one of regions divided from an image shown by at least one still image data of the predetermined number of items of still image data, from a rate of pixels to be masked in other regions.

According to the present invention, there is a region having a different rate of pixels to be masked from other regions, so that it is possible to make recognition of display content of the acquired original still image data difficult.

According to another example of the data-generating device,
wherein the still image data generating means sets a rate of pixels to be masked at an outline portion of an image shown by the acquired still image data to be greater than a rate of pixels to be masked at other portions.

According to the present invention, an outline portion of the image of replicated content becomes vaguer, so that it is possible to make recognition of display content of the original still image data from the replicated content difficult.

According to another example of the data-generating device,
wherein still image data is generated in which at least one pixel is not masked among pixels of matching display positions between the predetermined number of items of still image data.

According to the present invention, at a point of time when all of the predetermined number of items of still image data are displayed by playing back the generated movie data, unmasked pixels are displayed at least once at each display position. Consequently, it is possible to make people who look at the screen more accurately recognize display content of the original still image data.

According to another example of the data-generating device,
wherein the still image data generating means sets a rate of pixels to be masked higher when a number of items of still image data to generate is greater.

According to the present invention, the rate of pixels to be masked increases, so that it is possible to make recognition of display content of the acquired original still image data from the replicated content difficult. Further, even when the number of unmasked pixels per one still image data configuring movie data decreases, the number of items of still image data increases, so that it is possible to prevent recognition of display content of the original still image data from being difficult for people who look at the screen.

According to another example of data-generating device, wherein the still image data generating means generates still image data in which a pixel to be masked is painted with a color determined as a masking color.

According to another example of the data-generating device,
wherein the still image data generating means uses an intermediate color between a color of a pixel to be masked and a color of pixels around the pixel as a masking color.

According to the present invention, a color of the masked pixel is displayed as an intermediate color of an original color of the pixel and a color of pixels around this pixel, so that it is possible to make recognition of display content of the acquired original still image data from the replicated content difficult.

According to another example of the data-generating device,
wherein the movie data generating means comprises a frame rate determining means that determines a frame rate for display, and
the still image data generating means comprises a generation image number determining means that determines a number of items of still image data to generate based on the determined frame rate.

According to the present invention, it is possible to determine a number suitable for the frame rate as the number of items of still image data configuring movie data. Consequently, it is possible to make adjustment to make recognition of display content on the screen easy for people who look at the screen.

According to another example of the data-generating device,
wherein the acquiring means comprises:
an electronic data acquiring means that acquires electronic data which can be displayed on a screen of a display device; and
a converting means that converts the acquired electronic data into still image data.

According to the present invention, even when electronic data is not still image data, it is possible to prevent display content of electronic data on the screen from being accurately replicated.

According to another example, it is provided a data-generating method comprising:
an acquiring step of acquiring still image data;
a still image data generating step of generating a predetermined number of items of still image data in which at least part of pixels of the acquired still image data are masked, and varying positions of at least part of pixels in pixels to be masked, between at least two items of still image data of the predetermined number of still image data; and
a movie data generating step of generating movie data for which each of the generated still image data is displayed at a predetermined frame rate.

According to another example, it is provided a data-generating program causing a computer to function as:
an acquiring means that acquires still image data;
a still image data generating means that generates a predetermined number of items of still image data in which at least part of pixels of the acquired still image data are masked, and that varies positions of at least part of pixels in pixels to be masked, between at least two items of still image data of the predetermined number of still image data; and
a movie data generating means that generates movie data for which each of the generated still image data is displayed at a predetermined frame rate.

According to another example it is provided a recording medium in which a data-generating program is computer-readably recorded, the program causing a computer to function as:
an acquiring means that acquires still image data;
a still image data generating means that generates a predetermined number of items of still image data in which at least part of pixels of the acquired still image data are masked, and that varies positions of at least part of pixels in pixels to be masked, between at least two items of still image data of the predetermined number of still image data; and
a movie data generating means that generates movie data for which each of the generated still image data is displayed at a predetermined frame rate.

### Advantageous Effects of Invention

According to the present invention, the generated movie data is played back, so that a predetermined number of items of still image data are sequentially displayed at predetermined time intervals . Hence, even when display content on the screen at a given moment is replicated by screen capture and image capturing, content to be replicated is only the same as display content of one still image data among a predetermined number of items of still image data in which at least part of pixels are masked. By contrast with this, while the predetermined number of items of still image data are sequentially displayed at predetermined time intervals, unmasked pixels of each still image data are displayed on the screen. Consequently, it is possible to make people who look at the screen recognize that content more similar to display content of the acquired original still image data than each one of the predetermined number of items of still image data is displayed. Consequently, it is possible to prevent content displayed on the screen from being accurately replicated.

### Brief Description of Drawings

Fig. 1 is a block diagram illustrating an example of a schematic configuration of an electronic data converting device 1 according to an embodiment.
Fig. 2 is a view illustrating an example of a screen display image of electronic data and a screen display image of frame image data configuring movie data according to one embodiment.
Fig. 3 is a flowchart illustrating a processing example of a system control unit 20 of the electronic data converting device 1 according to one embodiment.
Fig. 4A and Fig. 4B illustrate another example of a screen display image of frame image data configuring movie data.

### Embodiments for carrying out the Invention

Hereinafter, an embodiment of the present invention will be described in details with reference to the drawings. In addition, the embodiment will be described below where a data-generating device according to the present invention is applied to an electronic data converting device.

### [1. Configuration of Electronic Data Converting Device]

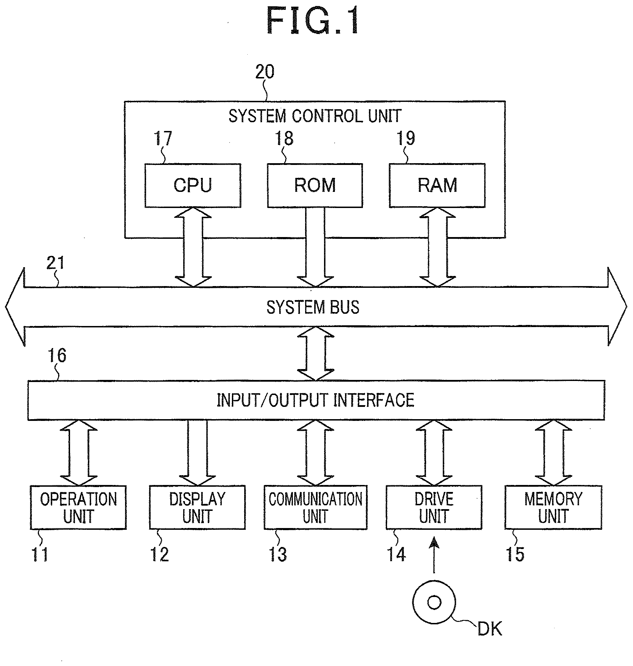

First, a configuration of an electronic data converting device 1 according to the present embodiment will be described using Fig. 1.

Fig. 1 is a block diagram illustrating an example of a schematic configuration of an electronic data converting device 1 according to the present embodiment.

As illustrated in Fig. 1, the electronic data converting device 1 has an operation unit 11, a display unit 12, a communication unit 13, a drive unit 14, a memory unit 15, an input/output interface unit 16 and a system control unit 20. Further, the system control unit 20 and the input/output interface unit 16 are connected through the system bus 21.

The operation unit 11 employs a configuration including, for example, a keyboard and a mouse, and receives an operation command from a user and outputs content of the command to the system control unit 20 as a command signal. The display unit 12 is, for example, a computer display such as a CRT (Cathode Ray Tube) display or a liquid crystal display, and displays information such as characters and images. The communication unit 13 connects to a network such as a LAN (Local Area Network) to control communication states with other information processing devices. The drive unit 14 reads, for example, data from a disc DK such as a flexible disc, a CD (Compact Disc) or a DVD (Digital Versatile Disc), and records, for example, data in the disc DK.

The memory unit 15 employs a configuration including, for example, a hard disc drive, and stores, for example, various programs (including an example of a data-generating program according to the present invention) and data. The programs stored in the memory unit 15 may be acquired from, for example, another information processing device through the network, or may be recorded in the disc DK and read through the drive unit 14. The input/output interface unit 16 performs interface processing between the operation unit 11 to the memory unit 15, and the control unit 20. The system control unit 20 is formed with, for example, a CPU (Central Processing Unit) 17, a ROM (Read Only Memory) 18 and a RAM 19. When the CPU 17 reads and executes the various programs stored in the ROM 18 or the memory unit 15, the system control unit 20 controls each unit of the electronic data converting device 1. Further, the system control unit 20 functions as acquiring means, still image data generating means, movie data generating means, frame rate determining means, generation image number determining means, electronic data acquiring means and converting means according to the present invention.

For the electronic data converting device, for example, a personal computer or a server device can be adopted.

### [2. Outline of Function of Electronic Data Converting Device]

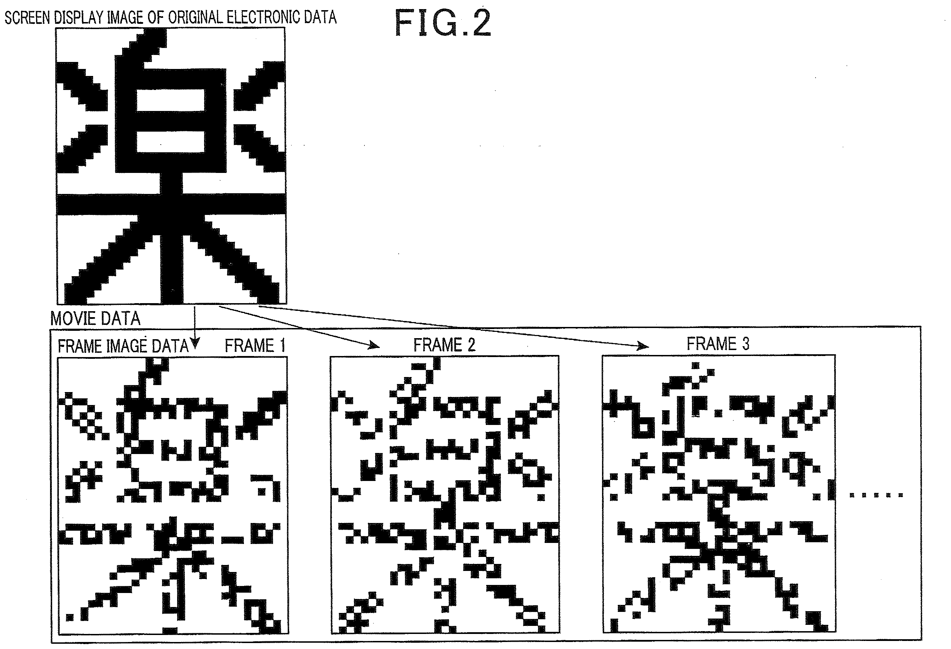

Next, the outline of a function of the electronic data converting device 1 according to the present embodiment will be described using Fig. 2.

Fig. 2 is a view illustrating an example of a screen display image of electronic data and a display image of frame image data configuring movie data according to the present embodiment.

The electronic data converting device 1 converts specified electronic data into movie data. The type of electronic data of a conversion target is not particularly limited as long as the electronic data can be displayed on the screen. For example, electronic data of a conversion target includes, for example, electronic document, image data and web pages (more specifically, HTML document configuring web pages, image data, electronic document and text data). In addition, an example of a screen display image of electronic data illustrated in Fig. 2 illustrates a pattern showing a character " 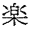 ", which is indicated in black, in a white background.

More specifically, when people look at a screen of the computer display which displays a movie by movie data playback processing, the electronic data converting device 1 generates movie data which allows people to recognize the same image as the screen display image of electronic data with their own eyes. Further, even when an action such as screen capture or image capturing is taken while movie data is displayed (hereinafter, referred to as "screen replication action"), the electronic data converting device 1 generates movie data from which the screen display image of electronic data cannot be accurately replicated.

More specifically, as illustrated in Fig. 2, movie data configured with a plurality of items of frame image data is generated from still image data corresponding to a screen display image of electronic data. Each frame image data is still image data and, when movie data is played back, a plurality of items of frame image data configuring movie data are sequentially displayed on the screen at a predetermined frame rate and repeatedly displayed. For a format of such movie data, for example, SWF (Small Web Format) of Adobe Flash (registered trademark) may be adopted. Meanwhile, the format of movie data is by no means limited to a specific format.

Each frame image data configuring movie data is still image data in which at least part of pixels are masked among pixels configuring the original still image data corresponding to the screen display image of each electronic data. Masking of a pixel according to the present embodiment is directed to painting a pixel of a masking target with some color (hereinafter "masking color"), and converting the original color of the pixel of the masking target. More specifically, masking of a pixel is directed to generating frame image data for which a pixel of a masking target is displayed with a color determined as a masking color instead of the original color of the pixel of the masking target. However, in some cases, a masking color of part of pixels is the same as the original color of a pixel of a masking target. Fig. 2 illustrates an example where a masking color is the same white color as a background color, and illustrates that part of the pattern of " 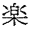 " is defective in a screen display image of each masked image data. In addition, a method of determining a masking color will be described below.

A pattern of the coordinate of a pixel to be masked varies between each frame image data configuring movie data. Meanwhile, different patterns of coordinates of pixels to be masked mean that at least part of coordinates of pixels to be masked, that is, display positions of these pixels are different. More specifically, the coordinate of a pixel to be masked is determined at random in one pixel unit. By this means, a masking pattern does not become the same between each frame image data, and a masking pattern does not have a regular pattern such as a stripe pattern. By contrast with this, focusing on an arbitrary coordinate of frame image data, there is at least one frame image data in which a pixel is not masked, among all items of frame image data. These conditions are satisfied between all coordinates. In addition, at part of coordinates, part of pixels may not be masked in all items of frame image data.

One of items of frame image data configuring movie data is displayed on a screen at a given moment when this movie data is played back. Then, even if a display image of the screen at a given screen is replicated by a screen replication action, an image to be replicated has a defect masked portion in frame image data. Consequently, it is not possible to accurately replicate the screen display image of electronic data. By contrast with this, at a point of time when all frame images configuring movie data are displayed, an unmasked pixel is displayed at least once. Then, it is possible to make people who look at the screen recognize as if the screen display image of the original electronic data is displayed due to, for example, an after image effect.

Next, a method of determining a frame rate, the number of frames and a masking factor of movie data to generate will be described. The frame rate, the number of frames and the masking factor may be set by each user or may be automatically determined by the electronic data converting device 1, or a value determined in advance as a fixed value may be stored in the memory unit 15.

When the frame rate is determined by the electronic data converting device 1, the system control unit 20 first acquires, for example, an assumable refresh rate (vertical synchronization frequency) of the computer display. This refresh rate may be inputted by, for example, the user. Instead, when the electronic data converting device 1 targets at playing back movie data, the system control unit 20 may acquire the setting of a current refresh rate of the display unit 12. Further, the system control unit 20 determines the frame rate based on the acquired refresh rate. More specifically, the fresh rate is the same value as or less than the refresh rate. Further, for example, the frame rate may be the same value as one of the divisor of the refresh rate. By so doing, it is possible to prevent an image from flickering when movie data is played back. However, in some cases, when the frame rate is too low and movie data is played back, people who look at the screen have difficulty in recognizing a screen display image of the original electronic data. Hence, a lower limit value which can be determined as a frame rate may be set. In this case, the system control unit 20 determines the frame rate such that the frame rate is a lower limit value or more. When, for example, the refresh rate is 60 Hz and the lower limit value of the frame rate is 24 fps, the frame rate is 30 fps or 60 fps.

The number of frames is the number of items of frame image data configuring movie data, and is two or more at the minimum requisite. When the electronic data converting device 1 determines the number of frames, for example, the system control unit 20 determines the number of frames based on the frame rate. One of reasons for increasing the number of frames is to decrease quality of images generated by an image replication action. As described below, when the number of frames is greater, the masking factor can be set higher. Further, when the masking factor is higher, it is more difficult to recognize a screen display image of the original electronic data from an image generated by a screen replication action. Meanwhile, when the number of frames is greater and a longer time is required to display all items of frame image data, recognition of a screen display image of the original electronic data becomes difficult in some cases. This is because, when, for example, the number of frames is increased to increase the masking factor, the ratio of a display time of unmasked pixels to the time required to display all items of frame image data is likely to become low. Hence, for example, an upper limit value of a time required to display all items of frame image data is set in advance. Further, the system control unit 20 determines the number of frames such that the time required when all items of frame image data are sequentially displayed at the determined frame rate is the set upper limit value or less. In this case, when the frame rate is higher, the number of frames can be set greater.

The masking factor refers to the rate of the number of pixels to be masked with respect to the total number of pixels configuring frame image data. When the electronic data converting device 1 determines the masking factor, the system control unit 20 determines the masking factor based on the number of frames. More specifically, when the number of frames is greater, the masking factor is set higher. When the masking factor is higher, it is possible to further decrease quality of an image generated by a screen replication action. Further, by sufficiently setting a higher masking factor (for example, 90% or more), it is possible to disable recognition of display content of the original electronic data from an image generated by a screen replication action, or make this recognition difficult. By this means, it is possible to prevent, for example, leakage of personal information or confidential information due to a screen replication action, or prevent secondary use of copyrighted work due to a screen replication action.

When the user determines the frame rate, the number of frames and the masking factor, the electronic data converting device 1 may have a function of adjusting the frame rate, the number of frames and the masking factor while the user checks a movie displayed on the display unit 12 by playing back the generated movie data.

Next, a method of determining a masking color will be described. There are various methods of determining a masking color.

For example, a masking color may be an intermediate color of the original color of a pixel to masked, and a background color around the pixel to be masked. For example, the system control unit 20 analyzes a screen display image of electronic data, and specifies, for example, a foreground portion and a background portion from this display image. Further, the system control unit 20 acquires colors of pixels in the background portion in a region of a predetermined number of pixels in a vertical direction and a horizontal direction around the pixel to be masked. Still further, the system control unit 20 calculates an average of brightness values of R (red), G (green) and B (blue) based on the acquired colors and the color of the pixel to be masked. Meanwhile, the calculated brightness values are brightness values of masking colors. As described above, an intermediate color of the original color of the pixel to be masked and the background colors around the pixel to be masked is used as a masking color, so that an image generated by a screen replication action looks blurred. Consequently, it is possible to make recognition of content of a screen display image of the original electronic data from the image generated by the screen replication action more difficult. This is particularly effective when a screen display image of electronic data is represented by a plurality of hues (multiple colors) . In addition, an intermediate color for a masking color may not be a color which is not right in the middle of the original color of the pixel to be masked and a background color around the pixel to be masked.

Further, for example, the masking color may be an intermediate color of all pixels in a region of a predetermined number of pixels in the vertical and horizontal direction around a pixel to be masked. Furthermore, for example, a masking color may be the same color as a background color of a screen display image of electronic data. Still further, a masking color may be a fixed color determined in advance, and brightness values of R, G and B of this fixed color may be stored in the memory unit 15. Moreover, the user may determine a masking color.

### [3. Operation of Electronic Data Converting Device]

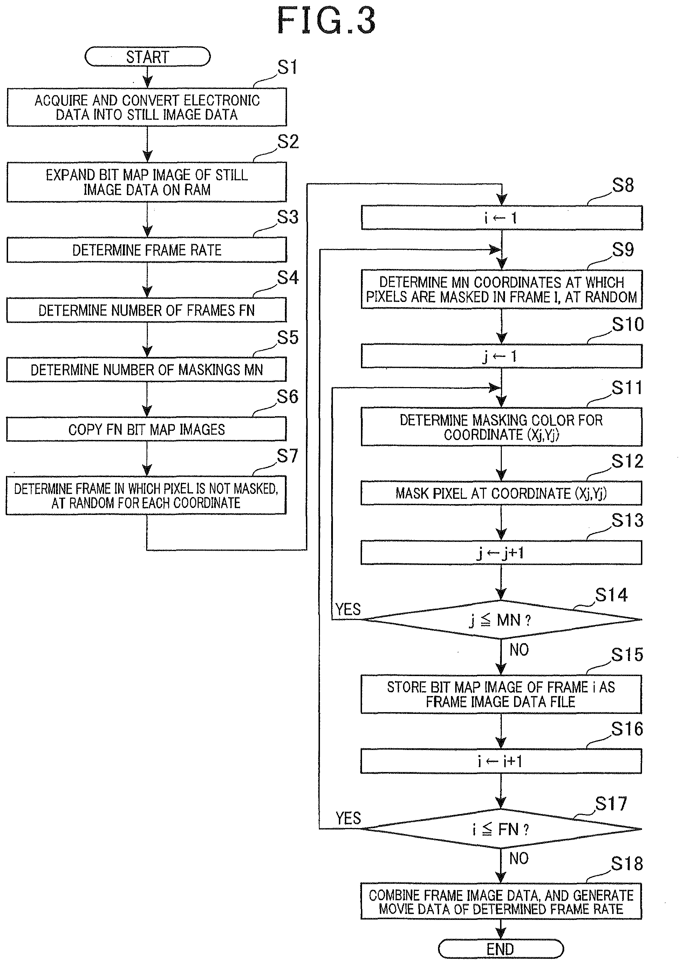

Next, the operation of the electronic data converting device 1 will be described using Fig. 3.

Fig. 3 is a flowchart illustrating a processing example of the system control unit 20 of the electronic data converting device 1 according to the present embodiment.

First, the system control unit 20 functions as acquiring means to acquire electronic data, and convert the acquired electronic data into still image data (step S1). More specifically, the system control unit 20 functions as electronic data acquiring means to acquire, for example, electronic data specified according to a user's operation of the operation unit 11. In this case, the system control unit 20 may acquire electronic data from, for example, another information processing device through the communication unit 13 and the network, may read electronic data from the disc DK through the drive unit 14 or may acquire electronic data stored in the memory unit 15. Further, the system control unit 20 functions as converting means to, for example, rasterize the acquired electronic data, generate still image data and store the still image data in the memory unit 15 as a data file of a predetermined format. The format of still image data includes, for example, a JPEG format, a TIFF format and a BMP format. Further, the system control unit 20 finds the numbers of pixels of the generated still image data in the vertical and horizontal directions, and the total number of pixels. In addition, when the acquired electronic data is still image data, the system control unit 20 can skip conversion processing.

Next, the system control unit 20 expands a bit map image of the generated still image data on a predetermined region of the RAM 19 (step S2). This bit map image is, for example, data adopting an alignment structure in which brightness values of R, G and B are set according to each coordinate. This bit map image corresponds to a screen display image of electronic data. In addition, when electronic data is converted into still image data, the system control unit 20 can also set still image data directly in the RAM 19 as a bit map image instead of temporarily storing still image data as a data file.

Next, the system control unit 20 functions as still image data generating means to generate a plurality of items of frame image data in steps S3 to S17.

First, the system control unit 20 functions as frame rate determining means to determine a frame rate of movie data to generate, based on an assumable refresh rate of the computer display (step S3). Next, the system control unit 20 functions as generation image number determining means to determine the number of frames FN of movie data to generate, based on the determined frame rate (step S4). Next, the system control unit 20 determines the number of maskings MN (step S5). More specifically, the system control unit 20 determines the masking factor based on the number of frames FN. Furthermore, the system control unit 20 multiplies the total number of pixels of still image data with the determined masking factor to calculate the number of maskings MN. In addition, the example of the method of determining the frame rate, the number of frames and the masking factor has already been described, and therefore will not be described here.

Next, the system control unit 20 makes nine copies of the expanded bit map image on the RAM 19 (step S6). Each copied bit map image corresponds to frame image data. Further, each bit map image is assigned one of frame numbers 1 to FN.

Next, the system control unit 20 determines a frame in which a pixel is not masked, at random for each coordinate of still image data (step S7). For example, the system control unit 20 generates one of numbers 1 to FN at random, and stores the generated number in the RAM 19 as a number of a frame in which a pixel of a coordinate of interest is not masked. The system control unit 20 performs this processing for all coordinates of still image data.

Next, the system control unit 20 sets 1 to a variable i indicating a frame number (step S8). Next, the system control unit 20 determines MN coordinates at which pixels are masked in a bit map image of the frame i, at random (step S9). In this case, the system control unit 20 selects a coordinate other than the coordinates at which pixels are decided not to be masked in the frame i in step S7. The coordinate at which a pixel is masked is stored in the RAM 19 as variables Xₙ and Yₙ (n=1, 2, 3 ... and MN).

Next, the system control unit 20 sets 1 to a variable j indicating a coordinate number (step S10). Next, the system control unit 20 determines a masking color of a coordinate (Xⱼ,Yⱼ) (step S11). In addition, the example of the method of determining a masking color has already been described, and therefore will not be described. Next, the system control unit 20 masks the pixel at the coordinate (Xⱼ,Yⱼ) using the determined masking color (step S12). More specifically, the system control unit 20 determines each brightness value of the determined masking color in a region corresponding to the coordinate (Xⱼ,Yⱼ) of the bit map image in the frame i set in the RAM 19.

Next, the system control unit 20 adds 1 to the variable j (step S13), and determines whether or not the variable j is the number of maskings MN or less (step S14). In this case, when the variable j is the number of maskings MN or less (step S14; YES), the system control unit 20 proceeds to step S11.

By contrast with this, when the variable j is greater than the number of maskings NM (step S14: NO), the system control unit 20 controls the memory unit 15 to store the bit map image in the frame i as a file of frame image data of a predetermined format (step S15).

Next, the system control unit 20 adds 1 to the variable i (step S16), and determines whether the variable i is the number of frames FN or less (step S17). In this case, when the variable i is the number of frames FN (step S17: YES), the system control unit 20 proceeds to step S9.

By contrast with this, when the variable i is greater than the number of frames FN (step S17: NO), the system control unit 20 functions as movie data generating means to generate movie data (step S18). More specifically, the system control unit 20 combines each frame image data of the generated frame 1 to frame FN to generate movie data. In this case, the system control unit 20 sets the determined frame rate to, for example, the frame rate setting portion in movie data. In addition, a configuration may be employed where each of the above frame image data may be combined in, for example, an ascending order or a descending order based on the frame number, or may be combined at random without referring to the frame number. The system control unit 20 finishes processing illustrated in Fig. 3 when movie data is generated in this way.

The generated movie data can be played back by an information processing device which can play back data of a corresponding format. This information processing device plays back the generated movie data, so that frame image data included in movie data is sequentially displayed on the screen at, for example, the frame rate set in the movie data in combination order of the frame 1, the frame 2 and the frame 3. Further, after the last frame image data is displayed, the first frame image data is displayed again.

As described above, with the present embodiment, the system control unit 20 acquires still image data which shows a screen display image of electronic data as a bit map image, and generates a number of items of frame image data in which at least part of pixels of the acquired still image data are masked, according to the determined number of frames. In this case, the system control unit 20 varies a position pattern of a pixel to be masked, between each frame image data. Further, the system control unit 20 generates movie data for which the generated frame image data is displayed at the determined frame rate.

Consequently, even when a screen display image at a given moment is replicated due to a screen replication action, the replicated screen display image is only the same as the screen display image of one frame image data in which at least part of pixels are masked. By contrast with this, compared to a case where frame image data is displayed one by one, it is possible to make people who look at the screen recognize that content more similar to the original screen display image is displayed. Consequently, it is possible to prevent content displayed on the screen from being accurately replicated.

Further, the system control unit 20 acquires electronic data and acquires still image data by converting the acquired electronic data, so that it is possible to more accurately recognize content of a screen display image of electronic data which can be displayed.

Furthermore, the system control unit 20 generates frame image data such that one of pixels of matching coordinates between each frame image data is not masked, so that people who look at the screen can more accurately recognize content of the original screen display image.

Still further, the system control unit 20 may increase the masking factor which is the rate of pixels to be masked when the number of frames is greater. In this case, it is possible to make recognition of content of a screen display image of the original electronic data from a replicated screen display image difficult, and prevent recognition of content of the original screen display image from being difficult for people who look at the screen.

Further, the system control unit 20 may use an intermediate color of a color of a pixel to be masked and a color of pixels around the pixel as a masking color. In this case, it is possible to make recognition of content of the original screen display image from a replicated screen display image difficult.

Further, the system control unit 20 may determine a frame rate of movie data, and determine the number of frames of movie data based on the determined frame rate. In this case, it is possible to determine the number of frames matching the frame rate and, consequently, make adjustment such that people who look at the screen can easily recognize a screen display image.

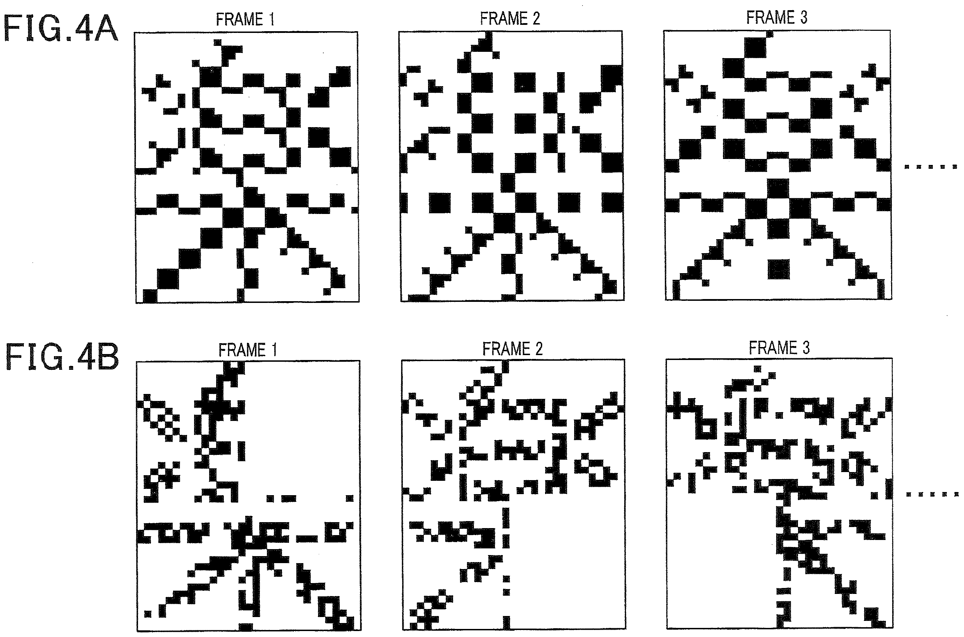

In addition, with the above embodiment, the coordinate of a pixel to be masked is determined at random. However, for example, frame image data masked according to a pattern determined in advance may be generated. In this case, for example, information about a mask pattern per frame is stored in the memory unit 15 in advance. Further, the system control unit 20 masks a pixel in each frame based on the mask pattern information. Furthermore, a regular pattern may be used for a mask pattern. Fig. 4A is an example of a screen display image of frame image data masked according to a mask pattern of a regular pattern. Fig. 4A illustrates an example where a position pattern of a pixel to be masked in each frame is varied by using a checkered pattern for a mask pattern and shifting the position of the checkered pattern in each frame.

Further, by dividing a screen display image of each frame image data into a plurality of regions, the masking factor may be determined per region. Furthermore, the masking factor of at least one region may be varied from masking factors of the other regions. Fig. 4B illustrates an example of a screen display image of frame image data where a screen display image of each frame image data is vertically and horizontally divided into two and partitioned into four regions, the masking factor of one of the regions is 100% and the masking factor of the other three regions is 50%. Thus, there is a region having a different masking factor from the other regions, so that it is possible to make recognition of content of a screen display image of the original electronic data from replicated content difficult. Further, in Fig. 4B, the region in which the masking factor is 100% includes an upper right portion in the frame 1, a lower right portion in a frame 2 and a lower left portion in the frame 3. Thus, a region having a different masking factor from the other regions may sequentially change per frame. In addition, the masking factor is by no means limited only to 50% or 100%. Further, it is possible to set 0% of the masking factor for part of regions, and set a rate greater than 0% of the masking factor for the other regions. Furthermore, the masking factor may be set per region by the user. In this case, it is possible to, for example, set a masking factor of a region replication of which particularly needs to be prevented in a screen display image of the original data, higher than masking factors of the other regions.

Further, the system control unit 20 may extract an outline portion such as a character or a pattern by image analysis from a screen display image of each frame image data, and set a masking factor of the outline portion higher than a masking factor of other portions than the outline portion. By this means, the outline portion of an image of replicated content becomes vaguer, so that it is possible to make recognition of a screen display image of the original electronic data from a replicated screen display image difficult. In addition, a method of extracting an outline portion from an image is known, and therefore will not be described in details.

Further, with the above embodiment, one of pixels of matching coordinates between frame image data is not masked. However, if the number of pixels is smaller than the number of frames, two or more pixels may not be masked. Further, there may be part of coordinates of pixels which are all masked in each frame image data. In this case, although, when people look at the screen in which movie data is played back, part of pixels look defective, part of pixels may be defective as long as the degree of defect is not disadvantageous for recognition of content displayed on the screen.

Further, with the above embodiment, patterns of coordinates of pixels to be masked vary between all items of frame image data. However, patterns only need to be varied between at least two items of frame image data.

### Reference Sign List

- 1: ELECTRONIC DATA CONVERTING DEVICE
- 11: OPERATION UNIT
- 12: DISPLAY UNIT
- 13: COMMUNICATION UNIT
- 14: DRIVE UNIT
- 15: MEMORY UNIT
- 16: INPUT/OUTPUT INTERFACE
- 17: CPU
- 18: ROM
- 19: RAM
- 20: SYSTEM CONTROL UNIT
- 21: SYSTEM BUS

## Claims

1. A data-generating device for generating movie data from a still image comprising:
a system control means (20) arranged to
determine a frame rate of the movie data to be generated (S3);
determine a number of frames, FN, according to said frame rate (S4) ;
determine a masking factor based on the said number of frames, and calculate a number of maskings, MN, by multiplying a total number of pixels of the still image with the masking factor (S5), wherein the masking factor corresponds to the rate of the number of pixels to be masked with respect to the total number of pixels of the still image and wherein when said number of frames, FN, is greater, the masking factor is set higher;
copy the still image (S6) FN-times to generate FN copy images;
mask MN pixels in each copy, wherein
for each of the MN pixels,
a masking color of a coordinate of the pixel is determined (S11) as an intermediate color between a color of the pixel to be masked and a color of the pixels around the pixel to be masked,
the pixel is masked using the masking color (S12), and
at least part of coordinates of the pixels to be masked are different between each copy (S9-S15),
generate movie data by combining the FN copy images (S18), wherein
the system control means (20) is arranged to divide each frame of said FN copy images in a plurality of regions and vary the masking factor in at least one of the regions of one frame from the masking factor in other regions of the same frame.

2. The data-generating device according to claim 1,
wherein the system control means (20) is arranged to determine a position of a pixel to be masked such that a mask pattern of the copies becomes irregular.

3. The data-generating device according to any one of claims 1 to 2, wherein the system control means (20) is arranged to set the masking factor at an outline portion of an image shown by a copy to be greater than the masking factor at other portions.

4. The data-generating device according to any one of claims 1 to 3, wherein at least one pixel is not masked among pixels of matching display positions between the copies.

5. The data-generating device according to any one of claims 1 to 4, wherein the system control means (20) is further arranged to
acquire electronic data which can be displayed on a screen of a display device; and
convert the acquired electronic data into still image data (S1).

6. A data-generating method for generating movie data from a still image comprising:
A first determining step of determining a frame rate of the movie data to be generated;
A second determining step of determining a number of frames, FN, according to said frame rate (S4);
A third determining step of determining a masking factor based on the said number of frames, and
A calculating step of calculating a number of maskings, MN, by multiplying a total number of pixels of the still image with the masking factor (S5), wherein the masking factor corresponds to the rate of the number of pixels to be masked with respect to the total number of pixels of the still image and wherein when said number of frames, FN, is greater, the masking factor is set higher;
a copying step (S6) copying an image FN-times to generate FN copy images;
a masking step (S12) of masking MN pixels in each copy, wherein
for each of the MN pixels,
a masking color of a coordinate of the pixel is determined (S11) as an intermediate color between a color of the pixel to be masked and a color of the pixels around the pixel to be masked,
the pixel is masked using the masking color (S12), and
at least part of coordinates of the pixels to be masked are different between each copy (S9-S15);
a movie data generating step (S18) of generating movie data by combining the FN copy images; wherein
each frame of said FN copy images is divided in a plurality of regions, and the masking factor is varied in at least one of the regions of one frame from the masking factor in other regions of the same frame.

7. A data-generating program causing a computer to function as a data-generating device according to one of claims 1 to 5.

8. A recording medium in which a data-generating program is computer-readably recorded, the program causing a computer to function as a data-generating device according to one of claims 1 to 5.

## Patentansprüche

1. Datenerzeugungsvorrichtung zum Erzeugen von Filmdaten aus einem Standbild, umfassend:
ein Systemsteuerungsmittel (20), das eingerichtet ist zum
Bestimmen einer Einzelbildrate der zu erzeugenden Filmdaten (S3);
Bestimmen einer Anzahl von Einzelbildern, FN, in Abhängigkeit von der Einzelbildrate (S4);
Bestimmen eines Maskierungsfaktors basierend auf der Anzahl von Einzelbildern und Berechnen einer Anzahl von Maskierungen, MN, durch Multiplizieren einer Gesamtzahl von Pixeln des Standbildes mit dem Maskierungsfaktor (S5), wobei der Maskierungsfaktor dem Verhältnis der Anzahl von zu maskierenden Pixeln in Bezug auf die Gesamtzahl von Pixeln des Standbildes entspricht und wobei, wenn die Anzahl von Einzelbildern, FN, größer ist, der Maskierungsfaktor höher eingestellt wird;
Kopieren des Standbilds (S6) FN-mal, um FN Kopiebilder zu erzeugen;
Maskieren von MN Pixeln in jeder Kopie, wobei
für jedes der MN-Pixel
eine Maskierungsfarbe einer Koordinate des Pixels als eine Zwischenfarbe zwischen einer Farbe des zu maskierenden Pixels und einer Farbe der Pixel um das zu maskierende Pixel bestimmt wird (S11),
das Pixel unter Verwendung der Maskierungsfarbe maskiert wird (S12), und
mindestens ein Teil der Koordinaten der zu maskierenden Pixel zwischen jeder Kopie unterschiedlich sind (S9-S15),
Erzeugen von Filmdaten durch Kombinieren der FN Kopiebilder (S18), wobei
das Systemsteuermittel (20) eingerichtet ist, um jedes Einzelbild der FN Kopierbilder in eine Vielzahl von Bereichen zu unterteilen und den Maskierungsfaktor in mindestens einem der Bereiche eines Einzelbildes gegenüber dem Maskierungsfaktor in anderen Bereichen desselben Einzelbildes zu ändern.

2. Datenerzeugungsvorrichtung nach Anspruch 1,
wobei das Systemsteuermittel (20) eingerichtet ist, um eine Position eines zu maskierenden Pixels so zu bestimmen, dass ein Maskenmuster der Kopien unregelmäßig wird.

3. Datenerzeugungsvorrichtung nach einem der Ansprüche 1 bis 2,
wobei das Systemsteuermittel (20) so eingerichtet ist, dass der Maskierungsfaktor an einem Umrissabschnitt eines durch eine Kopie dargestellten Bildes größer ist als der Maskierungsfaktor an anderen Abschnitten.

4. Datenerzeugungsvorrichtung nach einem der Ansprüche 1 bis 3,
wobei mindestens ein Pixel unter den Pixeln mit übereinstimmenden Anzeigepositionen zwischen den Kopien nicht maskiert ist.

5. Datenerzeugungsvorrichtung nach einem der Ansprüche 1 bis 4, wobei
das Systemsteuermittel (20) weiter eingerichtet ist zum
Erfassen elektronischer Daten, die auf einem Bildschirm einer Anzeigevorrichtung angezeigt werden können; und
Umwandeln der erfassten elektronischen Daten in Standbilddaten (S1).

6. Datenerzeugungsverfahren zum Erzeugen von Filmdaten aus einem Standbild, umfassend:
einen ersten Bestimmungsschritt zum Bestimmen einer Einzelbildrate der zu erzeugenden Filmdaten;
einen zweiten Bestimmungsschritt zum Bestimmen einer Anzahl von Einzelbildern, FN, in Abhängigkeit von der Einzelbildrate (S4);
einen dritten Bestimmungsschritt zum Bestimmen eines Maskierungsfaktors basierend auf der Anzahl von Einzelbildern, und
einen Berechnungsschritt zum Berechnen einer Anzahl von Maskierungen, MN, durch Multiplizieren einer Gesamtzahl von Pixeln des Standbildes mit dem Maskierungsfaktor (S5), wobei der Maskierungsfaktor dem Verhältnis der Anzahl von zu maskierenden Pixeln in Bezug auf die Gesamtzahl von Pixeln des Standbildes entspricht und wobei, wenn die Anzahl von Einzelbildern, FN, größer ist, der Maskierungsfaktor höher eingestellt wird;
einen Kopierschritt (S6) zum Kopieren des Standbilds FN-mal, um FN Kopiebilder zu erzeugen;
einen Maskierungsschritt (S12) zum Maskieren von MN Pixeln in jeder Kopie, wobei
für jedes der MN Pixel
eine Maskierungsfarbe einer Koordinate des Pixels als eine Zwischenfarbe zwischen einer Farbe des zu maskierenden Pixels und einer Farbe der Pixel um das zu maskierende Pixel bestimmt wird (S11),
das Pixel unter Verwendung der Maskierungsfarbe maskiert wird (S12), und
mindestens ein Teil der Koordinaten der zu maskierenden Pixel zwischen jeder Kopie unterschiedlich sind (S9-S15);
einen Filmdaten-Erzeugungsschritt (S18) zum Erzeugen von Filmdaten durch Kombinieren der FN Kopiebilder; wobei
jedes Einzelbild der FN Kopierbilder in eine Vielzahl von Bereichen unterteilt wird und der Maskierungsfaktor in mindestens einem der Bereiche eines Einzelbildes gegenüber dem Maskierungsfaktor in anderen Bereichen desselben Einzelbildes geändert wird.

7. Datenerzeugungsprogramm, das einen Computer veranlasst, als Datenerzeugungsvorrichtung nach einem der Ansprüche 1 bis 5 zu arbeiten.

8. Aufzeichnungsmedium, auf dem ein Datenerzeugungsprogramm computerlesbar aufgezeichnet ist, wobei das Programm einen Computer veranlasst, als eine Datenerzeugungsvorrichtung nach einem der Ansprüche 1 bis 5 zu arbeiten.

## Revendications

1. Dispositif de génération de données pour générer des données de film à partir d'une image fixe comprenant :
un moyen de commande système (20) agencé pour
déterminer une fréquence de trames des données de film à générer (S3) ;
déterminer un nombre de trames, FN, en fonction de ladite fréquence de trames (S4) ;
déterminer un facteur de masquage sur la base dudit nombre de trames, et calculer un nombre de masquages, MN, en multipliant un nombre total de pixels de l'image fixe par le facteur de masquage (S5), dans lequel le facteur de masquage correspond au rapport du nombre de pixels à masquer par rapport au nombre total de pixels de l'image fixe et dans lequel lorsque ledit nombre de trames, FN, est supérieur, le facteur de masquage est établi à une valeur supérieure ;
copier l'image fixe (S6) FN fois pour générer FN images de copie ;
masquer MN pixels dans chaque copie, dans lequel
pour chacun des MN pixels,
une couleur de masquage d'une coordonnée du pixel est déterminée (S11) en tant que couleur intermédiaire entre une couleur du pixel à masquer et une couleur des pixels autour du pixel à masquer,
le pixel est masqué en utilisant la couleur de masquage (S12), et
au moins une partie des coordonnées des pixels à masquer sont différentes entre chaque copie (S9-S15),
générer des données de film en combinant les FN images de copie (S18), dans lequel
le moyen de commande système (20) est agencé pour diviser chaque trame desdites FN images de copie en une pluralité de régions et faire varier le facteur de masquage dans au moins une des régions d'une trame par rapport au facteur de masquage dans d'autres régions de la même trame.

2. Dispositif de génération de données selon la revendication 1,
dans lequel le moyen de commande système (20) est agencé pour déterminer une position d'un pixel à masquer de telle sorte qu'un motif de masque des copies devient irrégulier.

3. Dispositif de génération de données selon l'une quelconque des revendications 1 à 2,
dans lequel le moyen de commande de système (20) est agencé pour établir le facteur de masquage au niveau d'une partie de contour d'une image représentée par une copie à une valeur supérieure au facteur de masquage au niveau d'autres parties.

4. Dispositif de génération de données selon l'une quelconque des revendications 1 à 3,
dans lequel au moins un pixel n'est pas masqué parmi des pixels de positions d'affichage correspondantes entre les copies.

5. Dispositif de génération de données selon l'une quelconque des revendications 1 à 4,
dans lequel le moyen de commande système (20) est en outre agencé pour
acquérir des données électroniques qui peuvent être affichées sur un écran d'un dispositif d'affichage ; et
convertir les données électroniques acquises en données d'image fixe (S1).

6. Procédé de génération de données pour générer des données de film à partir d'une image fixe comprenant :
une première étape de détermination consistant à déterminer une fréquence de trames des données de film à générer ;
une deuxième étape de détermination consistant à déterminer un nombre de trames, FN, en fonction de ladite fréquence de trames (S4) ;
une troisième étape de détermination consistant à déterminer un facteur de masquage sur la base dudit nombre de trames, et
une étape de calcul consistant à calculer un nombre de masquages, MN, en multipliant un nombre total de pixels de l'image fixe par le facteur de masquage (S5), dans lequel le facteur de masquage correspond au rapport du nombre de pixels à masquer par rapport au nombre total de pixels de l'image fixe et dans lequel lorsque ledit nombre de trames, FN, est supérieur, le facteur de masquage est établi à une valeur supérieure ;
une étape de copie (S6) copiant une image FN fois pour générer FN images de copie ;
une étape de masquage (S12) consistant à masquer MN pixels dans chaque copie, dans lequel
pour chacun des MN pixels,
une couleur de masquage d'une coordonnée du pixel est déterminée (S11) en tant que couleur intermédiaire entre une couleur du pixel à masquer et une couleur des pixels autour du pixel à masquer,
le pixel est masqué en utilisant la couleur de masquage (S12), et
au moins une partie des coordonnées des pixels à masquer sont différentes entre chaque copie (S9-S15) ;
une étape de génération de données de film (S18) consistant à générer des données de film en combinant les FN images de copie ; dans lequel
chaque trame desdites FN images de copie est divisée en une pluralité de régions, et le facteur de masquage est modifié dans au moins une des régions d'une trame par rapport au facteur de masquage dans d'autres régions de la même trame.

7. Programme de génération de données amenant un ordinateur à fonctionner en tant que dispositif de génération de données selon l'une des revendications 1 à 5.

8. Support d'enregistrement dans lequel un programme de génération de données est enregistré de manière lisible par ordinateur, le programme amenant un ordinateur à fonctionner en tant que dispositif de génération de données selon l'une des revendications 1 à 5.
